# EUROPÄISCHE PATENTSCHRIFT

(11) **EP 3 272 215 B1**
(45) Veröffentlichungstag und Bekanntmachung des Hinweises auf die Patenterteilung: **24.03.2021**
(21) Anmeldenummer: 17401076.9
(22) Anmeldetag: 14.07.2017
(51) Int. Cl.: A01M 7/00

(54) **LANDWIRTSCHAFTLICHE FELDSPRITZE**
AGRICULTURAL FIELD SPRAYING DEVICE
PULVÉRISATEUR AGRICOLE

(30) Priorität: 19.07.2016 DE 102016113233
(43) Veröffentlichungstag der Anmeldung: 24.01.2018
(73) Patentinhaber: Amazonen-Werke H. Dreyer GmbH & Co. KG, 49205 Hasbergen (DE)
(72) Erfinder: Austermann, Stefan, 48291 Telgte (DE); Kretzschmar, Tom, 04249 Leipzig (DE)

(56) Entgegenhaltungen:
- EP-A1- 2 923 570
- DE-U1-202006 010 074
- US-A1- 2009 014 447

## Beschreibung

Die Erfindung betrifft eine landwirtschaftliche Feldspritze gemäß des Oberbegriffes des Patentanspruches 1.

Eine derartige Feldspritze ist in EP 2 923 570 A1 beschrieben. Die beschriebene Feldspritze dient dem dosierten Ausbringen von Wirkstoffmitteln, vorzugsweise von Pflanzenschutz- und/oder Düngemitteln. Die Wirkstoffmittel liegen typischerweise in konzentrierter Form vor. Daher werden die Wirkstoffmittel vorzugsweise mit Wasser als Trägerflüssigkeit zu einer Spritzbrühe verdünnt. Die Spritzbrühe wird in einem Flüssigkeitsbehälter bevorratet. Weiterhin weist die Feldspritze eine Zumischvorrichtung auf, welche in bekannter Weise als Einspülschleuse ausgeführt ist. Mittels der Zumischvorrichtung werden die Wirkstoffmittel der Trägerflüssigkeit zugemischt. Über einen Flüssigkeitskreislauf ist die Zumischvorrichtung mit dem Flüssigkeitsbehälter verbunden. Die Bedienung des Flüssigkeitskreislaufs erfolgt über ein Bedienfeld, welches in einen die Einstell- und/oder Steuerarmaturen des Flüssigkeitskreislaufs umfassenden Einstellbereich und einen weitere Einrichtungen, wie Wartungsarmaturen und/oder Filtereinrichtungen, umfassenden Wartungsbereich unterteilt ist.

Somit bietet das Bedienfeld eine Vielzahl von Einstellmöglichkeiten für den Betrieb und/oder die Instandhaltung der Feldspritze. Für einen komfortablen und zeiteffektiven Betrieb der Feldspritze ist diese Vielzahl von Einstellmöglichkeiten aber nicht notwendig. Im Regelfall mischt ein Bediener vor Beginn des Ausbringvorgangs die in konzentrierter Form vorliegenden Wirkstoffmittel der Trägerflüssigkeit zu und/oder stellt die Parameter zur Befüllung des Flüssigkeitsbehälters ein. Dies geschieht ausschließlich über die Einstell- und/oder Steuerarmaturen des Einstellbereichs des Bedienfeldes.

Der Erfindung liegt daher die Aufgabe zugrunde, ein Bedienfeld zu schaffen, über welches ein komfortables sowie zeiteffektives Zumischen der Wirkstoffmittel der Trägerflüssigkeit und/oder Einstellen der Parameter zur Befüllung des Flüssigkeitsbehälters sichergestellt ist.

Diese Aufgabe wird erfindungsgemäß durch die kennzeichnenden Merkmale von Anspruch 1 gelöst.

Durch das Abdecken der Wartungsarmaturen im Wartungsbereich des Bedienfeldes wird die Aufmerksamkeit des Bedieners auf die Einstell- und/oder Steuerarmaturen zum Zumischen der Wirkstoffmittel und/oder Einstellen der Parameter zur Befüllung des Flüssigkeitsbehälters gelenkt. Die Gefahr einer Fehlbedienung, beispielsweise durch Unachtsamkeit, sinkt erheblich, da sich lediglich die für die Routinearbeiten relevanten Einstell- und/oder Steuerarmaturen im Blickfeld des Bedieners befinden.

Zudem dient die Abdeckklappe des Wartungsbereiches den Wartungsarmaturen als zusätzlicher Schutz. Im Stand der Technik sind Abdeckklappen im Bereich der Zumischvorrichtung einer landwirtschaftlichen Feldspritze an sich bekannt. Sie dienen in abdeckendem Zustand, beispielsweise während Transportfahrten und/oder des Ausbringvorgangs, dem Schutz der empfindlichen Bestandteile der Zumischeinrichtungen, wie den Einstell-, Steuer- und/oder Wartungsarmaturen gegen Witterungseinflüsse, mechanische Einwirkungen und/oder Verschmutzungen und beugen somit in bekannter Weise dem Verschleiß vor. Typischerweise sind derartige Abdeckungen aber im Bedarfsfall nur gänzlich zu öffnen, so dass entweder der gesamte Bereich der Zumischvorrichtung abgedeckt oder freigegeben ist. Zum Schutz besonders empfindlicher Bauteile, wie beispielsweise der Filtereinrichtungen, ist ein zusätzlicher Schutz durch die erfindungsgemäße Abdeckung besonders vorteilhaft.

Ein zusätzlicher Vorteil wird dadurch erreicht, dass die Abdeckklappe in ihrer Arbeitsposition zumindest einen zumindest annähernd waagerecht orientierten Ablagebereich aufweist. Die während notwendiger Wartungsarbeiten, beispielsweise eines Filtertauschs, geöffnete Abdeckklappe dient dann als Ablage für beispielsweise Werkzeuge und/oder Austauschteile. Sie verhindert überdies, dass Gegenstände, die einem Wartungsarbeiten durchführenden Bediener entgleiten, zu Boden fallen und der Bediener somit zu deren Wiederbeschaffung seine Arbeiten unterbrechen muss.

Es ist von Vorteil, dass die Schwenkachse im unteren Bereich der Abdeckklappe angeordnet ist. Somit kann die Abdeckklappe in einfacher Weise um diese Achse aus einer zumindest annähernd senkrechten Abdeckposition herabgeklappt werden.

Zusätzlich ist es vorteilhaft, dass die Schwenkachse in zumindest annähernd waagerechter Richtung verläuft. Durch eine derart festgelegte Schwenkachse der Abdeckklappe ist in besonders einfacher Weise sichergestellt, dass die Abdeccklappe in ihrer Arbeitsposition zumindest einen zumindest annähernd waagerecht orientierten Ablagebereich aufweist.

Ein weiterer Vorteil wird erreicht, indem die Abdeckklappe in ihrer Abdeck- und ihrer Arbeitsposition feststell- und/oder festsetzbar ist. Durch diese Maßnahme wird die Arbeitssicherheit erheblich gesteigert. Durch ein Feststellen und/oder Festsetzen der Abdeckklappe kann sie sich nicht ungewollt öffnen, beispielsweise während der Bediener im Bereich der Zumischeinrichtung tätig ist. Durch eine ungewollte Bewegung wäre der Bediener gefährdet, da er gegen die Abdeckklappe stoßen oder sich beispielsweise die Hände einklemmen kann. Schließt sich dagegen die Abdeckklappe ungewollt, beispielsweise während der Bediener Wartungsarbeiten durchführt, besteht erneut eine Verletzungsgefahr durch Einklemmen.

Ein besonderer Vorteil wird dadurch erreicht, dass die Abdeckklappe geeignet ist, in ihrer Arbeitsposition dem Bediener der Feldspritze als Arbeitstisch zu dienen. Dies ist in bereits beschriebener Weise während der Durchführung von Wartungsarbeiten vorteilhaft, um Werkzeuge und/oder Austauschteile ablegen zu können. Ebenso ist es denkbar, dass dieser Arbeitstisch während des Zumischens der Wirkstoffmittel genutzt wird. In diesem Fall können Auf dem Tisch Hilfsmittel zur Dosierung der Wirkstoffmittel, beispielsweise ein Messbecher und/oder eine Waage, abgestellt sein.
Es ist vorteilhaft, dass auf dem Ablagebereich der Abdeckklappe eine Dokumentenhülle befestigt ist. Dadurch können auf dem Arbeitstisch können Dokumente abgelegt werden, beispielsweise Bedienungshandbücher zur Unterstützung der Wartungsarbeiten, aber auch Rezepturen oder Auftragsbücher, in denen Informationen zum bevorstehenden Ausbringvorgang vermerkt sind, bzw. nach denen die Wirkstoffmittel dosiert werden.

Eine Dokumentenhülle hat zudem den Vorteil, dass die Dokumente nicht von einem Windstoß erfasst und weg getragen und/oder durcheinander gebracht werden können, sowie in geschützter Weise untergebracht sind.

Dabei ist es von Vorteil, dass auf dem Ablagebereich der Abdeckklappe eine Dokumentenhülle lösbar befestigt ist. Dadurch sind die Dokumente in einfacher Weise austauschbar, indem die Hülle mit dem jeweils relevanten Dokument befestigt wird. Die Dokumente müssen dabei nicht an der Feldspritze, beispielsweise bei windigen und/oder regnerischen Witterungsverhältnissen in aufwändiger und unkomfortabler Weise getauscht werden. Zudem ist der Bediener zur Lektüre des relevanten Dokuments nicht auf den Ort der Zumischvorrichtung und/oder der Feldspritze festgelegt.

Sind in der Dokumentenhülle beispielsweise Aufträge und/oder Rezepturen vermerkt, kann der Bediener die Dokumentenhülle in vorteilhafter Weise mitnehmen, um beispielsweise anhand der Liste die benötigen Wirkstoffmittel zu beschaffen und/oder zusammenzustellen.

Es ist vorteilhaft, dass die Dokumentenhülle wasserdicht ist. Diese Maßnahme dient dem Schutz der Dokumente. Eine landwirtschaftliche Feldspritze ist typischerweise den Einflüssen der Witterung ausgesetzt, sodass ein Schutz beispielsweise gegen Regen besonders wichtig ist. Zudem ist der Betrieb einer landwirtschaftlichen Feldspritze stets an die Verwendung von Flüssigkeiten geknüpft, wodurch ein Schutz der Dokumente vor diesen Flüssigkeiten notwendig ist.

Es ist besonders vorteilhaft, dass das Bedienfeld im Bereich oder in der Nähe der Zumischvorrichtung angeordnet ist. Auf diese Weise ist das Zumischen der Wirkstoffmittel der Trägerflüssigkeit für den Bediener besonders komfortabel. Die Einstellung und/oder Steuerung des gesamten Zumischvorgangs und/oder des Befüllvorgangs des Flüssigkeitsbehälters ist von einer zentralen Stelle aus möglich. Dies spart dem Bediener viel Zeit.

Weitere Einzelheiten der Erfindung sind der Beispielsbeschreibung und den Zeichnungen zu entnehmen. Die Zeichnungen zeigen
- Fig.1: landwirtschaftliche Feldspritze in perspektivischer Darstellung von schräg vorne,
- Fig.2: das Bedienfeld einer landwirtschaftlichen Feldspritze mit Abdeckklappe in Abdeckposition in seitlicher Ansicht von links,
- Fig.3: das Bedienfeld einer landwirtschaftlichen Feldspritze mit Abdeckklappe in Abdeckposition in perspektivischer Ansicht von der linken Seite,
- Fig.4: das Bedienfeld einer landwirtschaftlichen Feldspritze mit Abdeckklappe in Arbeitsposition in seitlicher Ansicht von links,
- Fig.5: das Bedienfeld einer landwirtschaftlichen Feldspritze mit Abdeckklappe in Arbeitsposition in perspektivischer Ansicht von der linken Seite und
- Fig.6: die Abdeckklappe des Bedienfeldes einer landwirtschaftlichen Feldspritze in Arbeitsposition in perspektivischer Ansicht.

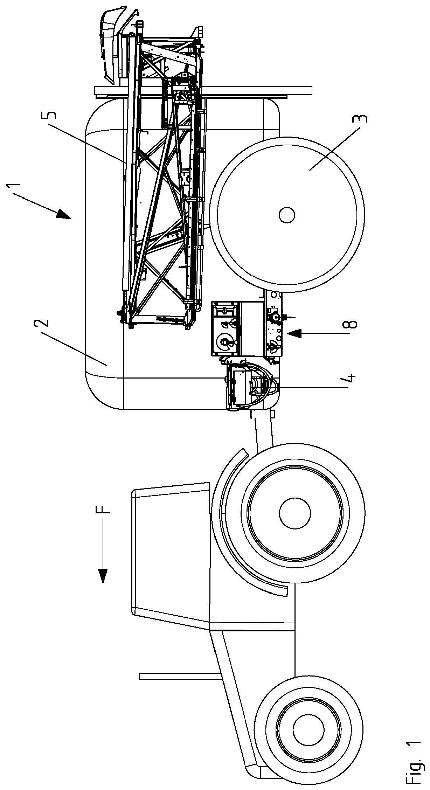

Eine landwirtschaftliche Feldspritze 1 zum Ausbringen von Wirkstoffmitteln, vorzugsweise Pflanzenschutz- und/oder Düngemitteln, ist in Fig. 1 gezeigt. Die Feldspritze 1 ist als gezogene Feldspritze 1 ausgebildet und wird von einem landwirtschaftlichen Zugfahrzeug gezogen. Ebenso kann die Feldspritze 1 auch zum Anbau an ein landwirtschaftliches Zugfahrzeug ausgebildet sein.

Die Feldspritze 1 weist einen Flüssigkeitsbehälter 2 auf, welcher über einen Rahmen auf Rädern 3 abgestützt ist. Der Flüssigkeitsbehälter 2 dient der Bevorratung der auszubringenden Spritzbrühe. Die Spritzbrühe setzt sich vorzugsweise aus Wasser als Trägerflüssigkeit zusammen, welcher in konzentrierter Form als Pulver, Feststoff und/oder Flüssigkeit vorliegende Wirkstoffmittel zugemischt werden.

Das Zumischen der Wirkstoffmittel erfolgt in an sich bekannter Weise mithilfe einer Zumischvorrichtung 4, welche im Beispiel der Fig. 1 bis 5 als Einspülschleuse ausgeführt ist.

Die angemischte und im Flüssigkeitsbehälter 2 bevorratete Spritzbrühe wird mittels an einem Gestänge 5 beabstandet zueinander angeordneten, als Spritzdüsen ausgeführten Ausbringelementen über einer landwirtschaftlichen Nutzfläche ausgebracht.

Über einen nur teilweise in Form von Schlauchleitungen 6 dargestellten Flüssigkeitskreislauf sind der Flüssigkeitsbehälter 2, die Zumischvorrichtung 4 und die Ausbringelemente miteinander verbunden.

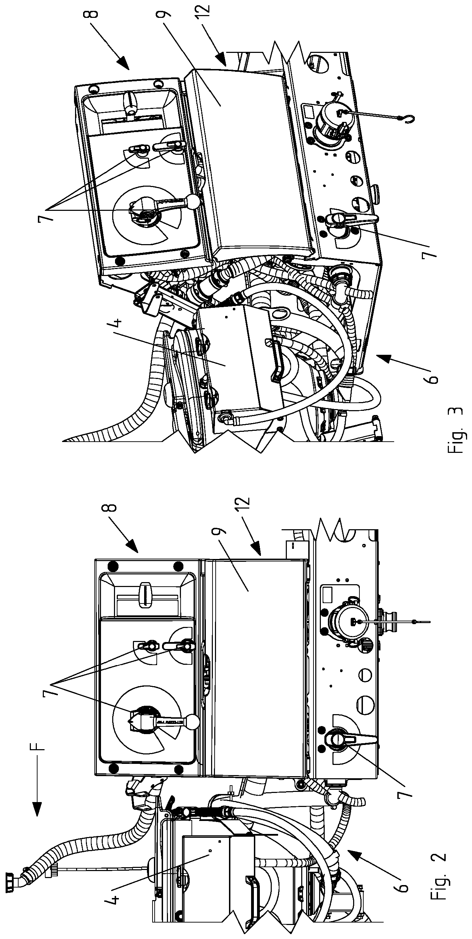

Das Einstellen und/oder Steuern des Zumischens der Wirkstoffmittel und/oder des Befüllens des Flüssigkeitsbehälters erfolgt über die Einstell- und/oder Steuerarmaturen 7 eines Bedienfeldes 8, welches auf der in Fahrtrichtung F linken Seite der Feldspritze angeordnet ist, wie sie in den Fig. 2 bis 5 gezeigt sind. Unter einer Abdeckklappe 9 umfasst das Bedienfeld 8 zudem Wartungsarmaturen 10 zur Instandhaltung der landwirtschaftlichen Feldspritze 1. In bevorzugter Weise umfassen die Wartungsarmaturen 10 die Filtereinrichtungen des Flüssigkeitskreislaufs.

Die Abdeckklappe 9 ist in ihrem unteren Bereich mittels Scharnieren 11 schwenkbar am Bedienfeld 8 der Feldspritze 1 angelenkt. Die Schwenkachse liegt dabei zumindest annähernd parallel zum Erdboden und ist zumindest annähernd parallel zur Fahrrichtung F ausgerichtet.

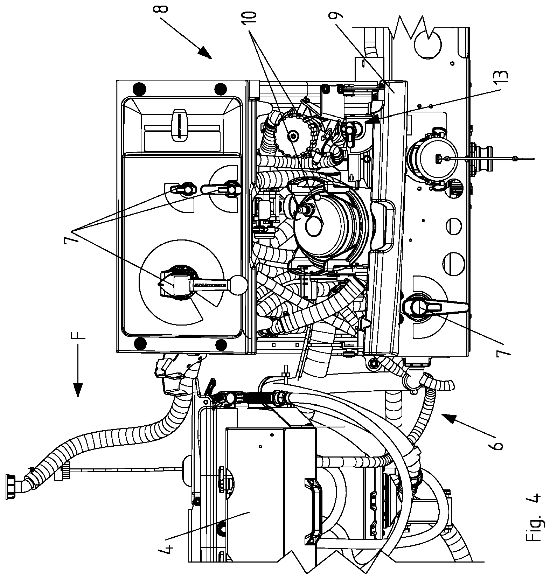

Die Abdeckklappe 9 ist in eine Abdeckposition 12, wie sie die Fig. 2 und 3 zeigt, sowie in eine Arbeitsposition 13, wie sie die Fig. 4 bis 6 zeigt, verbringbar und mittels geeigneter Mittel in beiden Positionen 12,13 feststell- und/oder festsetzbar. In Abdeckposition 12 deckt die Abdeckklappe 9 die Wartungsarmaturen 10 des Bedienfeldes 8 ab. Dadurch werden diese Wartungsarmaturen 10 besonders gut vor mechanischen Einwirkungen, Witterungseinflüssen und/oder Verschmutzungen geschützt. Gleichzeitig wird die Aufmerksamkeit des Bedieners auf die nicht abgedeckten, für Routinearbeiten notwendigen Einstell- und/oder Steuerarmaturen gelenkt.

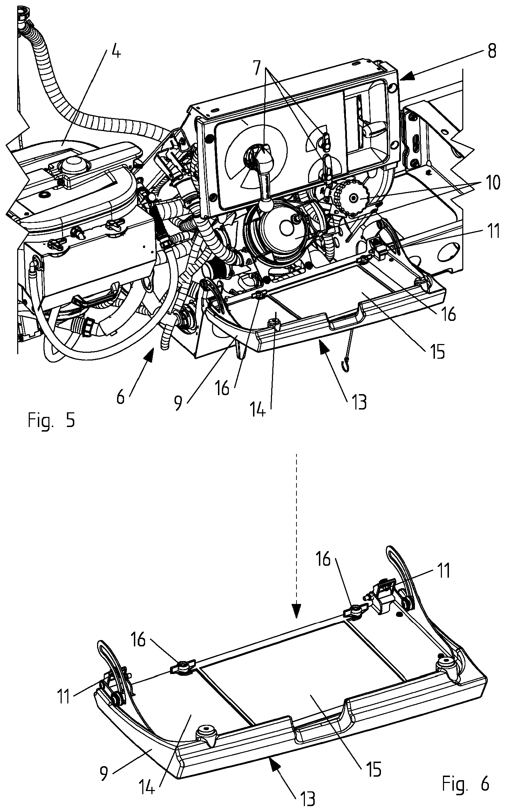

Die Abdeckklappe 9 befindet sich während des Ausbringvorgangs und/oder während Transportfahrten in ihrer Abdeckposition 12. Für Wartungsarbeiten, beispielsweise einem Austausch der Filtereinrichtungen, wird die Abdeckklappe 9 in ihre Arbeitsposition 13 verbracht, wie es in den Fig. 4 und 5 gezeigt ist.

In ihrer Arbeitsposition 13 weist die Abdeckklappe 9 zumindest einen zumindest annähernd waagerecht orientierten Ablagebereich 14 auf. Dieser Ablagebereich 14 kann von einem Bediener während der Durchführung von Wartungsarbeiten genutzt werden, um Werkzeuge und/oder Austauschteile abzulegen, wodurch die dem Bediener die Durchführung der Arbeiten erheblich erleichtert wird.

Im gezeigten Beispiel der Fig. 2 bis 5 ist das Bedienfeld 8 im Bereich der Zumischvorrichtung 4 angeordnet. In bevorzugter Weise sind das Bedienfeld 8 und die Zumischvorrichtung 4 direkt benachbart. So hat der Bediener die Möglichkeit, die für das Zumischen der Wirkstoffmittel notwendigen Wirkstoffmittelgebinde und/oder Hilfsmittel, wie Waage und/oder Messbecher, auf dem Ablagebereich 14 abzustellen. Somit dient die Abdeckklappe 9 in ihrer Arbeitsstellung 13 als Arbeitstisch.

Eine Detailansicht der Abdeckklappe 9 in Arbeitsposition 13 zeigt Fig. 6. In bevorzugter Ausführungsform ist vorgesehen, dass auf dem Ablagebereich 14 der Abdeckklappe 9 eine Dokumentenhülle 15 lösbar befestigt ist. Die Befestigung erfolgt über geeignete Befestigungsmittel 16, die im Beispiel der Fig. 5 und 6 als Flügelschrauben ausgebildet sind.

In der Dokumentenhülle 15 können beispielsweise Bedienungshandbücher zur Unterstützung der Wartungsarbeiten, Rezepturen für das Zumischen der Wirkstoffmittel und/oder Auftragsbücher mit Informationen zu anstehenden Arbeitsaufgaben untergebracht sein. In bevorzugter Ausführung ist die Dokumentenhülle 15 wasserdicht, sodass die enthaltenen Dokumente vor Feuchtigkeitseinflüssen geschützt sind.

## Patentansprüche

1. Landwirtschaftliche Feldspritze (1) zum dosierten Ausbringen von Wirkstoffmitteln, vorzugsweise mit Wasser als Trägerflüssigkeit zu einer Spritzbrühe verdünnten Pflanzenschutz- und/oder Düngemitteln, aufweisend einen Flüssigkeitsbehälter (2) zur Bevorratung der auszubringenden Flüssigkeit, einen Flüssigkeitskreislauf (6) sowie Vorrichtungen, die geeignet sind, die Flüssigkeit dem Flüssigkeitskreislauf (6) zuzuführen, wobei die Bedienung des Flüssigkeitskreislaufes (6) mittels eines Bedienfeldes (8) erfolgt, wobei das Bedienfeld (8) in einen die Einstell- und/oder Steuerarmaturen (7) des Flüssigkeitskreislaufs (6) umfassenden Einstellbereich und einen weitere Einrichtungen, wie Wartungsarmaturen (10) und/oder Filtereinrichtungen, umfassenden Wartungsbereich unterteilt ist, **dadurch gekennzeichnet, dass** der Wartungsbereich mittels einer um eine Schwenkachse verschwenkbar angeordneten Abdeckklappe (9) abgedeckt ist und die Abdeckklappe (9) in eine die Wartungsarmaturen (10) abdeckende Abdeckposition (12) sowie in eine die Wartungsarmaturen (10) freigebende Arbeitsposition (13) bringbar ist und die Abdeckklappe (9) in ihrer Arbeitsposition (13) zumindest einen zumindest annähernd waagerecht orientierten Ablagebereich (14) aufweist und zwar so, dass Werkzeuge und/oder Austauschteile auf dem Ablagebereich (14) ablegbar sind.

2. Landwirtschaftliche Feldspritze (1) nach Anspruch 1, **dadurch gekennzeichnet, dass** die Schwenkachse im unteren Bereich der Abdeckklappe (9) angeordnet ist und zwar so, dass die Abdeckklappe (9) um diese Schwenkachse aus einer zumindest annährend senkrechten Abdeckposition herabklappbar ist

3. Landwirtschaftliche Feldspritze (1) nach zumindest einem der vorangegangenen Ansprüche **dadurch gekennzeichnet, dass** die Schwenkachse in waagerechter Richtung verläuft.

4. Landwirtschaftliche Feldspritze (1) nach zumindest einem der vorangegangenen Ansprüche **dadurch gekennzeichnet, dass die** Abdeckklappe (9) in ihrer Abdeck-(12) und ihrer Arbeitsposition (13) feststell- und/oder festsetzbar ist.

5. Landwirtschaftliche Feldspritze (1) nach zumindest einem der vorangegangenen Ansprüche **dadurch gekennzeichnet, dass** die Abdeckklappe (9) geeignet ist, in ihrer Arbeitsposition (13) dem Bediener der Feldspritze (1) als Arbeitstisch zu dienen und zwar so, dass Wirkstoffmittelgebinde und/oder Hilfsmittel abstellbar sind.

6. Landwirtschaftliche Feldspritze (1) nach zumindest einem der vorangegangenen Ansprüche **dadurch gekennzeichnet, dass** auf dem Ablagebereich (14) der Abdeckklappe (9) eine Dokumentenhülle (15) befestigt ist.

7. Landwirtschaftliche Feldspritze (1) nach zumindest einem der vorangegangenen Ansprüche **dadurch gekennzeichnet, dass** auf dem Ablagebereich (14) der Abdeckklappe (9) eine Dokumentenhülle (15) lösbar befestigt ist.

8. Landwirtschaftliche Feldspritze (1) nach zumindest einem der vorangegangenen Ansprüche **dadurch gekennzeichnet, dass** die Dokumentenhülle (15) wasserdicht ist.

## Claims

1. Agricultural field sprayer (1) for the metered dispensing of active compositions, preferably plant protection compositions and/or fertilizers diluted with water as a carrier liquid to form a spray liquor, having a liquid container (2) for storing the liquid to be dispensed, a liquid circuit (6), and devices that are suitable for feeding the liquid to the liquid circuit (6), wherein the liquid circuit (6) is controlled by means of a control panel (8), wherein the control panel (8) is subdivided into a setting region, comprising the setting and/or control fittings (7) of the liquid circuit (6), and a maintenance region, comprising further devices such as maintenance fittings (10) and/or filter devices, **characterized in that** the maintenance region is covered by means of a covering flap (9) that is arranged so as to be pivotable about a pivot axis, and the covering flap (9) is able to be moved into a covering position (12) covering the maintenance fittings (10) and into a working position (13) uncovering the maintenance fittings (10), and the covering flap (9) has, in its working position (13), at least one at least approximately horizontally oriented depositing region (14), specifically such that tools and/or replacement parts are able to be deposited on the depositing region (14).

2. Agricultural field sprayer (1) according to Claim 1, **characterized in that** the pivot axis is arranged in the lower region of the covering flap (9), specifically such that the covering flap (9) is able to be folded down about this axis from an at least approximately vertical covering position.

3. Agricultural field sprayer (1) according to at least one of the preceding claims, **characterized in that** the axis extends in a horizontal direction.

4. Agricultural field sprayer (1) according to at least one of the preceding claims, **characterized in that** the covering flap (9) is able to be fixed and/or locked in its covering position (12) and its working position (13) .

5. Agricultural field sprayer (1) according to at least one of the preceding claims, **characterized in that** the covering flap (9) is suitable for serving, in its working position (13), as a workbench for the operator of the field sprayer (1), specifically such that active composition containers and/or implements are able to be set down.

6. Agricultural field sprayer (1) according to at least one of the preceding claims, **characterized in that** a document sleeve (15) is fastened to the depositing region (14) of the covering flap (9).

7. Agricultural field sprayer (1) according to at least one of the preceding claims, **characterized in that** a document sleeve (15) is releasably fastened to the depositing region (14) of the covering flap (9).

8. Agricultural field sprayer (1) according to at least one of the preceding claims, **characterized in that** the document sleeve (15) is watertight.

## Revendications

1. Pulvérisateur agricole (1) destiné à l'application dosée d'agents actifs, de préférence d'agents phytopharmaceutiques et/ou d'engrais dilués avec de l'eau comme liquide porteur pour obtenir un liquide de pulvérisation, le pulvérisateur comprenant un récipient de liquide (2) destiné à stocker le liquide à appliquer, un circuit de liquide (6) et des dispositifs qui sont appropriés pour amener le liquide au circuit de liquide (6), le circuit de liquide (6) étant commandé au moyen d'un panneau de commande (8), le panneau de commande (8) étant divisé en une zone de réglage qui comprend les accessoires de réglage et/ou de commande (7) du circuit de liquide (6) et une zone de maintenance qui comprend d'autres moyens de réglage, tels que des accessoires de maintenance (10) et/ou des moyens de filtration, **caractérisé en ce que** la zone de maintenance est couverte au moyen d'un volet de recouvrement (9) disposé de manière pivotante sur un axe de pivotement et le volet de recouvrement (9) peut être amené dans une position de recouvrement (12) dans laquelle les accessoires de maintenance (10) sont recouverts et dans une position de travail (13) dans laquelle les accessoires de maintenance (10) sont découverts, et le volet de recouvrement (9) comporte dans sa position de travail (13) au moins une zone de stockage (14) orientée au moins approximativement horizontalement de telle sorte que des outils et/ou des pièces de rechange puissent être placé(e)s sur la zone de stockage (14).

2. Pulvérisateur agricole (1) selon la revendication 1, **caractérisé en ce que** l'axe de pivotement est disposé dans la région inférieure du volet de recouvrement (9) de manière à ce que le volet de recouvrement (9) puisse être rabattu autour de cet axe de pivotement depuis une position de couvercle au moins approximativement verticale.

3. Pulvérisateur agricole (1) selon l'une au moins des revendications précédentes, **caractérisé en ce que** l'axe de pivotement s'étend dans la direction horizontale.

4. Pulvérisateur agricole (1) selon l'une au moins des revendications précédentes, **caractérisé en ce que** le volet de recouvrement (9) puisse être verrouillé et/ou immobilisé dans sa position de recouvrement (12) et sa position de travail (13).

5. Pulvérisateur agricole (1) selon l'une au moins des revendications précédentes, **caractérisé en ce que** le volet de recouvrement (9) est approprié pour servir, dans sa position de travail (13), de table de travail à l'utilisateur du pulvérisateur (1) de telle sorte que le fût d'agents actifs et/ou les moyens auxiliaires puissent être fermés.

6. Pulvérisateur agricole (1) selon l'une au moins des revendications précédentes, **caractérisé en ce qu'**une pochette de documents (15) est fixée sur la zone de stockage (14) du volet de recouvrement (9).

7. Pulvérisateur agricole (1) selon l'une au moins des revendications précédentes, **caractérisé en ce qu'**une pochette de documents (15) est fixée de manière amovible sur la zone de stockage (14) du volet de recouvrement (9).

8. Pulvérisateur agricole (1) selon l'une au moins des revendications précédentes, **caractérisé en ce que** la pochette de documents (15) est étanche à l'eau.
